# EUROPEAN PATENT APPLICATION

(11) **EP 4 779 171 A1**
(43) Date of publication of application: **22.07.2026**
(21) Application number: 24865395.8
(22) Date of filing: 09.09.2024
(51) Int. Cl.: F16F 1/12

(54) **SPRING MEMBER**

(30) Priority: 13.09.2023 JP 2023148510
(71) Applicant: NHK Spring Co., Ltd., Yokohama-shi, Kanagawa 236-0004 (JP)
(72) Inventor: KOBAYAKAWA, Jun, Yokohama-shi, Kanagawa 236-0004 (JP); SUWA, Taisuke, Yokohama-shi, Kanagawa 236-0004 (JP); SHIBATA, Yuichi, Yokohama-shi, Kanagawa 236-0004 (JP); SUGITANI, Tomoya, Yokohama-shi, Kanagawa 236-0004 (JP)
(74) Representative: Hoffmann Eitle
(86) International application number: PCT/JP2024/032168
(87) International publication number: WO 2025/057895

(57) **Abstract**

A spring member according to the present invention includes a coil spring formed of a wire rod wound in a helical way; and a sheet portion provided at an end of the coil spring and configured to receive a load of the coil spring, wherein the sheet portion includes a sheet configured to cover a part of one end of the coil spring, an insulator provided between the sheet and the coil spring, and an adhesive configured to attach the insulator and the coil spring, and the insulator has a shape in which a surface on a sheet side is partially cut out at an end on an edge end side of the coil spring.

## Description

### Field

The present invention relates to a spring member.

### Background

A spring member is known which includes a coil spring formed by winding a wire rod in a helical way and a sheet portion provided at an end of the coil spring to receive a load of the coil spring (see, for example, Patent Literature 1). In the spring member, an insulator having elasticity is disposed between the coil spring and the sheet portion, and the coil spring and the insulator are fixed with an adhesive.

### Citation List

### Patent Literature

Patent Literature 1: JP 2019-157886 A

### Summary

### Technical Problem

Meanwhile, the spring member is required to have durability to withstand high loads.

The present invention has been made in view of the above, and an object thereof is to provide a spring member capable of improving durability to withstand loads.

### Solution to Problem

To solve the above-described problem and achieve the object, a spring member according to the present invention includes: a coil spring formed of a wire rod wound in a helical way; and a sheet portion provided at an end of the coil spring and configured to receive a load of the coil spring, wherein the sheet portion includes a sheet configured to cover a part of one end of the coil spring, an insulator provided between the sheet and the coil spring, and an adhesive configured to attach the insulator and the coil spring, and the insulator has a shape in which a surface on a sheet side is partially cut out at an end on an edge end side of the coil spring.

Moreover, in the above-described spring member according to the present invention, the insulator includes an inclined surface formed on the sheet side at the end on the edge end side of the coil spring.

Moreover, in the above-described spring member according to the present invention, the insulator includes a curved surface formed on the sheet side at the end on the edge end side of the coil spring.

Moreover, in the above-described spring member according to the present invention, a surface of the insulator on the sheet side has an uneven shape.

Moreover, in the above-described spring member according to the present invention, an end of the adhesive on a coil spring side is positioned to be flush with an edge end of the coil spring.

### Advantageous Effects of Invention

According to the present invention, it is possible to achieve a spring member capable of improving durability to withstand loads.

### Brief Description of Drawings

[FIG. 1] FIG. 1 is a view illustrating a configuration of a spring member according to an embodiment of the present invention.
[FIG. 2] FIG. 2 is an enlarged view of a part of the spring member illustrated in FIG. 1.
[FIG. 3] FIG. 3 is an enlarged cross-sectional view of a part of the spring member illustrated in FIG. 1.
[FIG. 4] FIG. 4 is a diagram illustrating deformation of an insulator when a load is applied to the spring member illustrated in FIG. 3.
[FIG. 5] FIG. 5 is a view illustrating an example of a configuration of a conventional spring member.
[FIG. 6] FIG. 6 is a diagram illustrating deformation of an insulator when a load is applied to the spring member illustrated in FIG. 5.
[FIG. 7] FIG. 7 is a cross-sectional view illustrating a configuration of a spring member according to a first modification to the embodiment of the present invention.
[FIG. 8] FIG. 8 is a cross-sectional view illustrating a configuration of a spring member according to a second modification to the embodiment of the present invention. Description of Embodiments

In the following description, a spring member will be described as a mode for carrying out the present invention (hereinafter, referred to as an "embodiment"). The present invention is not limited to the embodiment. Further, in the drawings, the same portions are denoted by the same reference numerals. Furthermore, the drawings are schematic, and it should be noted that the relationship between the thickness and the width of each member, the ratio of each member, and the like are different from those in practice. In addition, there are portions in which the dimensions and ratios differ between the drawings.

### (Embodiment)

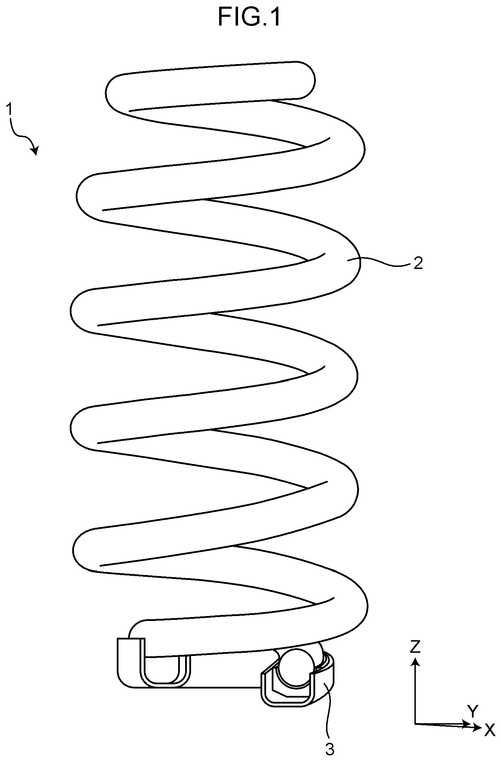

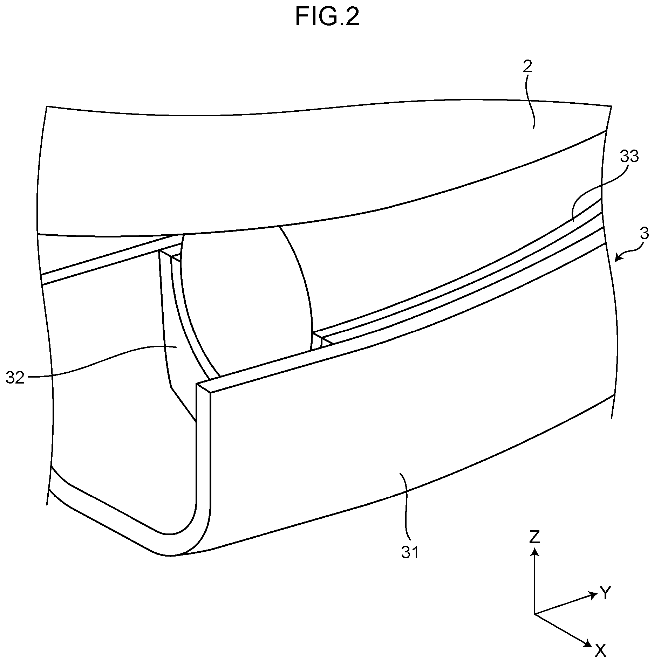

FIG. 1 is a view illustrating a configuration of a spring member according to an embodiment of the present invention. FIG. 2 is an enlarged view of a part of the spring member illustrated in FIG. 1. A spring member 1 includes a coil spring 2 formed by winding a wire rod in a helical way and a sheet portion 3 provided at an end of the coil spring 2 to receive a load of the coil spring.

The coil spring 2 is formed using, for example, flat plate-shaped spring steel made of metal, resin, or the like. In the present embodiment, it is assumed that a wire rod is wound around an axis extending in the Z direction illustrated in FIG. 1.

The sheet portion 3 includes a sheet 31 that covers a part of one end of the coil spring 2, an insulator 32 provided between the sheet 31 and the coil spring 2, and an adhesive 33 that adheres the insulator 32 and the coil spring 2 to each other (see FIG. 2).

The sheet 31 has a concave shape covering a part of the coil spring 2. The sheet 31 has a length less than one turn of the coil spring 2 and covers one end of the coil spring 2. Specifically, the sheet 31 is shaped to cover a part of a side surface of the coil spring 2 and to expose an end surface (surface intersecting the longitudinal (extending) direction of the wire rod) of the coil spring 2. This allows the coil spring 2 to be displaced in the extending direction (Y direction illustrated in FIG. 2) due to elastic deformation of the adhesive 33 or the like. Here, one turn corresponds to one revolution around the winding axis of the wire rod of the coil spring 2. Hereinafter, with an end of the coil spring 2 on the sheet portion 3 side as a base point (0 turn), the winding position along the winding axis is expressed as a "turn". At this time, the first turn is located at a position corresponding to the above-described one revolution from the base point.

The insulator 32 is formed using an elastic material, for example, rubber. The insulator 32 is disposed between the sheet 31 and the coil spring 2 in a region where the sheet 31 is disposed.

For example, a resin is used as the adhesive 33.

In the sheet portion 3 according to the present embodiment, the positions of the ends of the insulator 32 and the adhesive 33 on the coil spring 2 side are flush with an edge end of the coil spring 2. The edge end herein corresponds to an outer edge forming the end surface of the coil spring 2.

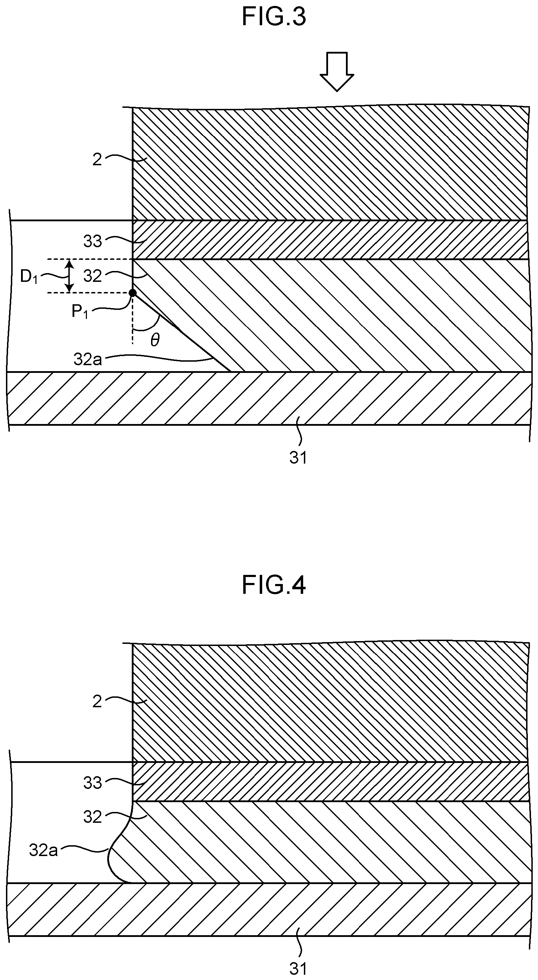

Next, a configuration of the insulator 32 will be described with reference to FIGS. 3 to 6. FIG. 3 is an enlarged cross-sectional view of a part of the spring member illustrated in FIG. 1. As illustrated in FIG. 3, the insulator 32 and the adhesive 33 are disposed between the coil spring 2 and the sheet 31 in order from the sheet 31 side.

Here, in the insulator 32, an inclined surface 32a is formed at an end on the sheet 31 side at an end on the edge end side of the coil spring 2. The inclined surface 32a is formed, for example, by chamfering a corner of the insulator 32, and the inclination angle θ with respect to an end surface of the insulator 32 on the adhesive 33 side is set in a range of more than 0° and less than 90°. Further, in the insulator 32, a distance D₁ from an end on the adhesive 33 side to a start point P₁ of the inclined surface 32a is set, and the length of the inclined surface 32a is determined according to the inclination angle θ. The distance D₁ is set to 1 mm, for example. The inclined surface 32a allows a space to be formed between the inclined surface 32a and the sheet 31.

Thus, the insulator 32 has a shape in which the surface on the sheet 31 side is partially cut out.

FIG. 4 is a diagram illustrating deformation of an insulator when a load is applied to the spring member illustrated in FIG. 3. In the state illustrated in FIG. 3, when the insulator 32 receives a load from the coil spring 2 side (see the arrow illustrated in FIG. 3), the insulator 32 is deformed according to the load. At this time, due to the deformation, a mass of the insulator 32 enters the space formed by the sheet 31 and the inclined surface 32a, and protrudes from an end surface formed by the coil spring 2 and the adhesive 33, for example. Depending on the applied load, the mass of the insulator 32 is flush with the end surface formed by the coil spring 2 and the adhesive 33 or remains in the space formed by the sheet 31 and the inclined surface 32a.

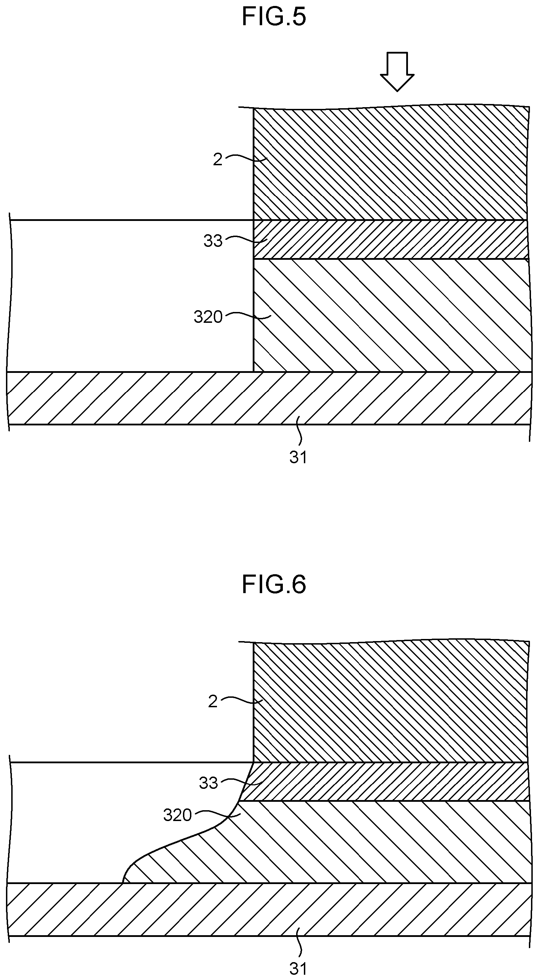

FIG. 5 is a view illustrating an example of a configuration of a conventional spring member. As an example of a conventional configuration, a configuration will be described in which an end surface of an insulator 320 is flush with the end surface of the coil spring 2 and the end surface of the adhesive 33 as illustrated in FIG. 5 in a state where a load other than gravity is not applied.

FIG. 6 is a diagram illustrating deformation of an insulator when a load is applied to the spring member illustrated in FIG. 5. FIG. 6 illustrates an example of a case where the same load as the load received by the insulator 32 illustrated in FIG. 4 is applied.

In the state illustrated in FIG. 5, when the insulator 320 receives a load from the coil spring 2 side (see the arrow illustrated in FIG. 5), the insulator 320 is deformed according to the load. At this time, due to the deformation, a mass of the insulator 32 largely protrudes from the end surface formed by the coil spring 2 and the adhesive 33.

Regarding an amount of the mass protruding from the end surface formed by the coil spring 2 and the adhesive 33, the amount of protrusion of the mass of the insulator 32 illustrated in FIG. 4 is smaller than the amount of protrusion of the mass of the insulator 320 illustrated in FIG. 6. In the configuration illustrated in FIGS. 3 and 4, since the mass of the insulator 32 is partially missing due to the inclined surface 32a, the deformation of the insulator 32 is apparently prevented.

In the sheet portion, the mass on the bottom surface side of the insulator shows a deformation behavior of actively protruding on the side opposite to the adhesive (sheet side), and stress is generated also in the adhesive along with the deformation. To address this, the mass at the edge end of the insulator is removed, which enables reduction of the stress generated in the adhesive. Therefore, in the configuration illustrated in FIGS. 3 and 4, the shear stress generated between the insulator 32 and the adhesive 33 is lower than that in the conventional example (see FIGS. 5 and 6). As a result, in the configuration of the present embodiment, the stress generated in the adhesive 33 is reduced.

In the embodiment described above, in the sheet portion 3 attached to the end of the coil spring 2, the positions of the ends of the insulator 32 and the adhesive 33 on the coil spring 2 side are flush with the end surface of the coil spring 2, and the inclined surface 32a is formed on the sheet 31 side of the insulator 32. According to the present embodiment, by forming the inclined surface 32a on the insulator 32, when a load toward the sheet portion 3 side is applied to the coil spring 2, the apparent deformation of the insulator 32 is prevented, and further, the stress generated in the adhesive 33 is reduced. It is therefore possible to prevent damage due to the edge end of the coil spring 2 wedging into the adhesive 33 or the insulator 32, and as a result, a spring member having improved durability to withstand loads can be achieved.

### (First Modification)

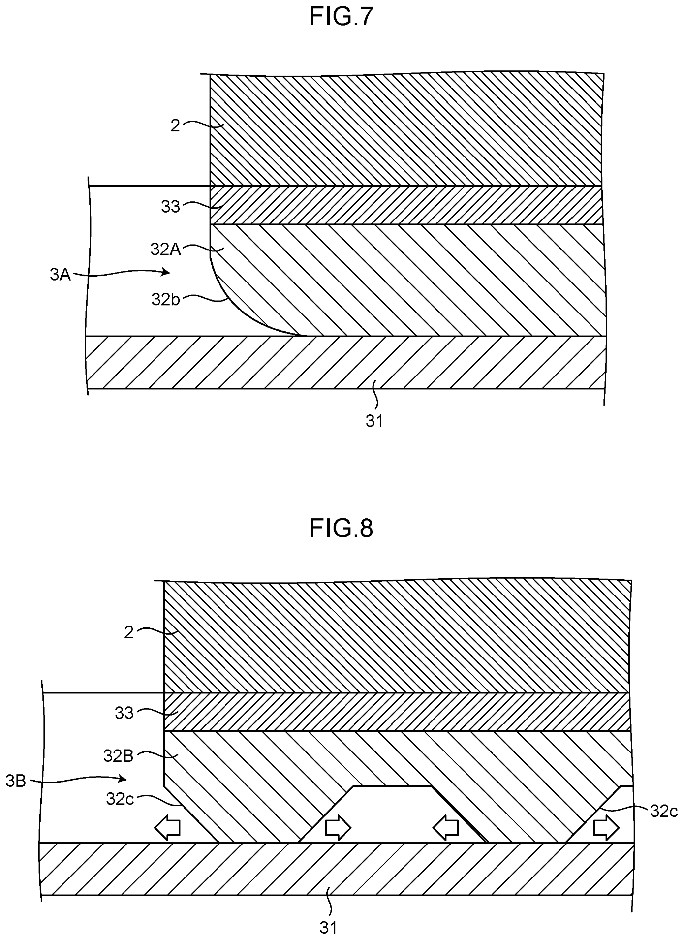

Next, the first modification to the embodiment of the present invention will be described with reference to FIG. 7. FIG. 7 is a cross-sectional view illustrating a configuration of a spring member according to a first modification to the embodiment of the present invention. In the first modification, the spring member described above includes a sheet portion 3A instead of the sheet portion 3. Note that the same constituent elements as those in the embodiment described above are denoted by the same reference numerals.

A spring member according to the first modification includes a coil spring 2 formed by winding a wire rod in a helical way and the sheet portion 3A provided at an end of the coil spring 2 to receive a load of the coil spring.

The sheet portion 3A includes a sheet 31 that covers a part of one end of the coil spring 2, an insulator 32A provided between the sheet 31 and the coil spring 2, and an adhesive 33 that adheres the insulator 32A and the coil spring 2 to each other.

The insulator 32A is formed using an elastic material, for example, rubber. The insulator 32A is disposed between the sheet 31 and the coil spring 2 in a region where the sheet 31 is disposed.

In the sheet portion 3A according to the first modification, the positions of the ends of the insulator 32A and the adhesive 33 on the coil spring 2 side are flush with an edge end of the coil spring 2.

Here, in the insulator 32A, a curved surface 32b is formed at an end on the sheet 31 side at an end on the edge end side of the coil spring 2. The curved surface 32b is formed, for example, by chamfering a corner of the insulator 32A. The curved surface 32b allows a space to be formed between the curved surface 32b and the sheet 31. In FIG. 7, an example in which the curved surface 32b has a surface that is convex toward the outside of the insulator 32A will be described, but the curved surface may have a concave surface.

Thus, the insulator 32A has a shape in which the surface on the sheet 31 side is partially cut out.

In the state illustrated in FIG. 7, when the insulator 32A receives a load from the coil spring 2 side (see the arrow illustrated in FIG. 3), the insulator 32A is deformed according to the load. At this time, due to the deformation, a mass of the insulator 32A enters the space formed by the sheet 31 and the curved surface 32b, and protrudes from an end surface formed by the coil spring 2 and the adhesive 33, for example. Depending on the load, the mass of the insulator 32A is flush with the end surface formed by the coil spring 2 and the adhesive 33 or remains in the space formed by the sheet 31 and the inclined surface 32a. At the time of deformation of the insulator 32A, since the mass is partially missing due to the curved surface 32b, the deformation of the insulator 32A is apparently prevented. Therefore, in the configuration illustrated in FIG. 7, the shear stress generated between the insulator 32A and the adhesive 33 is lower than that in the conventional example. As a result, in the configuration of the first modification, the stress generated in the adhesive 33 is reduced.

In the first modification described above, in the sheet portion 3A attached to the end of the coil spring 2, the positions of the ends of the insulator 32A and the adhesive 33 on the coil spring 2 side are flush with the end surface of the coil spring 2, and the curved surface 32b is formed on the sheet 31 side of the insulator 32A. According to the first modification, by forming the curved surface 32b on the insulator 32A, when a load toward the sheet portion 3A side is applied to the coil spring 2, the apparent deformation of the insulator 32A is prevented, and further, the stress generated in the adhesive 33 is reduced. It is therefore possible to prevent damage due to the edge end of the coil spring 2 wedging into the adhesive 33 or the insulator 32A, and as a result, a spring member capable of improving durability to withstand loads can be achieved.

### (Second Modification)

Next, the second modification to the embodiment of the present invention will be described with reference to FIG. 8. FIG. 8 is a cross-sectional view illustrating a configuration of a spring member according to a second modification to the embodiment of the present invention. In the second modification, the spring member described above includes a sheet portion 3B instead of the sheet portion 3. Note that the same constituent elements as those in the embodiment described above are denoted by the same reference numerals.

A spring member according to the second modification includes a coil spring 2 formed by winding a wire rod in a helical way and the sheet portion 3B provided at an end of the coil spring 2 to receive a load of the coil spring.

The sheet portion 3B includes a sheet 31 that covers a part of one end of the coil spring 2, an insulator 32B provided between the sheet 31 and the coil spring 2, and an adhesive 33 that adheres the insulator 32B and the coil spring 2 to each other.

The insulator 32B is formed using an elastic material, for example, rubber. The insulator 32B is disposed between the sheet 31 and the coil spring 2 in a region where the sheet 31 is disposed.

In the sheet portion 3B according to the second modification, the positions of the ends of the insulator 32B and the adhesive 33 on the coil spring 2 side are flush with an edge end of the coil spring 2.

Here, the insulator 32B has a plurality of protrusions 32c formed at an end on the sheet 31 side. The plurality of protrusions 32c is formed, for example, by intermittently removing a part of the surface of the insulator 32B on the sheet 31 side, and the plurality of protrusions 32c protrudes in a frustum shape. Due to the protrusions 32c, the surface of the insulator 32B on the sheet 31 side has an uneven shape, and a space is formed between the recess of the insulator 32B and the sheet 31.

Thus, the insulator 32B has a shape in which the surface on the sheet 31 side is partially cut out.

In the state illustrated in FIG. 8, when the insulator 32B receives a load from the coil spring 2 side (see the arrow illustrated in FIG. 3), the insulator 32B is deformed according to the load. At this time, due to the deformation, the protrusion 32c (mass) of the insulator 32B enters the space formed by the recess of the insulator 32B and the sheet 31. Therefore, the deformation of the insulator 32B is apparently prevented. Therefore, in the configuration illustrated in FIG. 8, the shear stress generated between the insulator 32B and the adhesive 33 is lower than that in the conventional example. As a result, in the configuration of the second modification, the stress generated in the adhesive 33 is reduced.

In the second modification described above, in the sheet portion 3B attached to the end of the coil spring 2, the positions of the ends of the insulator 32B and the adhesive 33 on the coil spring 2 side are flush with the end surface of the coil spring 2, and the plurality of protrusions 32c is formed on the sheet 31 side of the insulator 32B. According to the second modification, by forming the protrusions 32c (uneven shape) on the insulator 32B, when a load toward the sheet portion 3B side is applied to the coil spring 2, the apparent deformation of the insulator 32B is prevented, and further, the stress generated in the adhesive 33 is reduced. It is therefore possible to prevent damage due to the edge end of the coil spring 2 wedging into the adhesive 33 or the insulator 32B, and as a result, a spring member capable of improving durability to withstand loads can be achieved.

Further, in the second modification described above, since the formation of the plurality of protrusions 32c increases the space that the mass enters at the time of deformation of the insulator 32B as compared with the configuration according to the embodiment described above, the stress generated in the adhesive 33 can be further reduced.

In the second modification described above, the configuration including the plurality of protrusions 32c has been described, but it is only required that at least one protrusion 32c is provided, and for example, a configuration is possible in which one protrusion 32c is provided at a position corresponding to the edge end side of the coil spring 2. Alternatively, the protrusion 32c may be one protrusion extending from one end to the other end of the insulator.

As described above, the present invention can include various embodiments and the like not described herein, and various design changes and the like can be made without departing from the technical idea specified by the claims.

In the embodiment and modifications described above, the description has been given by exemplifying the configuration in which the positions of the ends of the insulator and the adhesive on the coil spring side are flush with the end surface of the coil spring (positioned on the same plane as the end surface of the coil spring). However, the positions of the ends of the insulator and the adhesive on the coil spring side are not limited thereto, and may be positions shifted along the extending direction of the coil spring with respect to the end surface of the coil spring.

### Industrial Applicability

As described above, the spring member according to the present invention is suitable for improving durability to withstand loads.

### Reference Signs List

- 1: SPRING MEMBER
- 2: COIL SPRING
- 3, 3A, 3B: SHEET PORTION
- 31: SHEET
- 32, 32A, 32B: INSULATOR
- 32a: INCLINED SURFACE
- 32b: CURVED SURFACE
- 32c: PROTRUSION
- 33: ADHESIVE

## Claims

1. A spring member comprising:
a coil spring formed of a wire rod wound in a helical way; and
a sheet portion provided at an end of the coil spring and configured to receive a load of the coil spring,
wherein
the sheet portion includes
a sheet configured to cover a part of one end of the coil spring,
an insulator provided between the sheet and the coil spring, and
an adhesive configured to attach the insulator and the coil spring, and
the insulator has a shape in which a surface on a sheet side is partially cut out at an end on an edge end side of the coil spring.

2. The spring member according to claim 1, wherein the insulator includes an inclined surface formed on the sheet side at the end on the edge end side of the coil spring.

3. The spring member according to claim 1, wherein the insulator includes a curved surface formed on the sheet side at the end on the edge end side of the coil spring.

4. The spring member according to claim 1, wherein a surface of the insulator on the sheet side has an uneven shape.

5. The spring member according to any one of claims 1 to 4, wherein an end of the adhesive on a coil spring side is positioned to be flush with an edge end of the coil spring.
